# EUROPEAN PATENT APPLICATION

(11) **EP 2 615 066 A1**
(43) Date of publication of application: **17.07.2013**
(21) Application number: 11823441.8
(22) Date of filing: 30.08.2011
(51) Int. Cl.: C02F 1/28, B01D 63/02, C02F 1/44

(54) **WATER PURIFICATION CARTRIDGE**

(30) Priority: 08.09.2010 JP 2010201050
(71) Applicant: Mitsubishi Rayon Cleansui Company, Limited, Tokyo 103-0016 (JP)
(72) Inventor: TAKEDA, Hatsumi, Toyohashi-shi Aichi 440-8601 (JP); HATAKEYAMA, Atsushi, Tokyo 103-0016 (JP)
(74) Representative: HOFFMANN EITLE
(86) International application number: PCT/JP2011/069538
(87) International publication number: WO 2012/032965

(57) **Abstract**

It is an object of the present invention to provide a water purification cartridge that allows a fine particle measure to be easily taken. The present invention is a water purification cartridge that is arranged between a raw water storage section and a purified water storage section of a water purifier to purify raw water using a filtering material, in which a container containing the filtering material include a recessed portion recessed inward on a top surface thereof and a raw water inlet for introducing the raw water into the inside is formed on the sidewall of the recessed portion.

## Description

### Technical Field

The present invention relates to a water purification cartridge and a water purifier provided therewith.

### Background Art

A so-called pot-type water purifier is known as a water purifier provided with a water purification cartridge. This pot-type water purifier has a structure in which a water purification cartridge is interposed between a raw water storage section located on the upside and a purified water storage section located on the downside. The raw water stored in the raw water storage section flows through the water purification cartridge into the purified water storage section under its self-weight and is purified in the water purification cartridge. A water purification cartridge installed in a pot-type water purifier is described, for example, in Patent Literature 1.

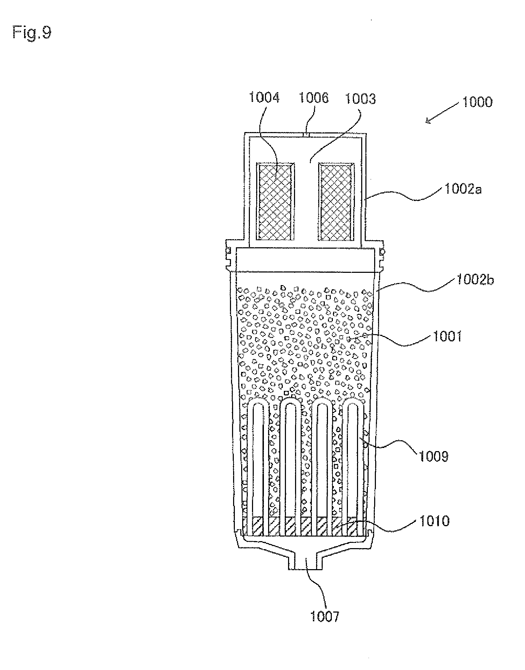

An example of a conventional water purification cartridge is shown in Figure 9. A water purification cartridge 1000 is provided with an adsorbent 1001 and a hollow fiber membrane 1009 as filtering materials arranged in a container. The container is principally constructed of an open top cylindrical case body 1002b that accommodates the filtering material and a cylindrical cover 1002a that covers the top opening of the cylindrical case body 1002b. The cylindrical cover 1002a constitutes a space 1003 which serves as an air collector in the container and an air outlet 1006 for exhausting air bubbles generated in the water purification cartridge is provided at the top center of the cylindrical cover 1002a. Furthermore, a raw water inlet 1004 is provided on the side of the cylindrical cover 1002a. Furthermore, the hollow fiber membrane 1009 is fixed inside the container using potting resin 1010 and a purified water outlet 1007 for purified water obtained after passing through the filtering material is provided below the potting resin 1010.

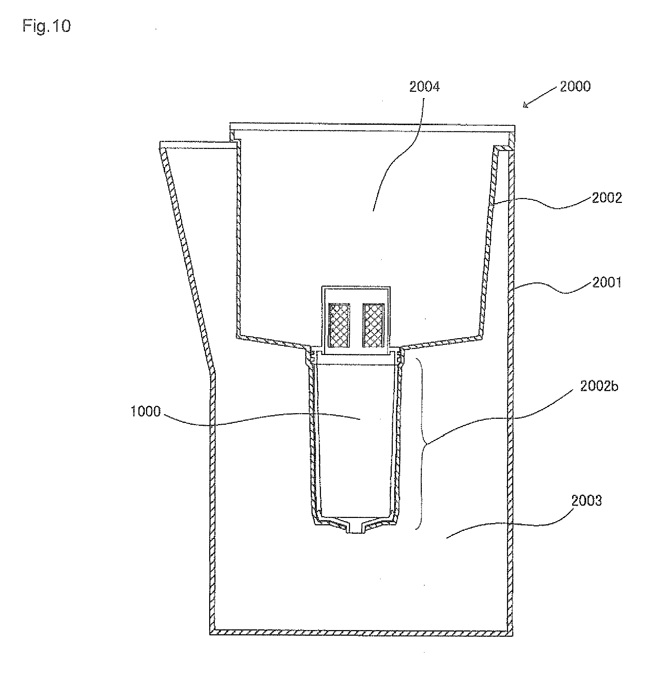

Figure 10 illustrates a schematic diagram of a pot-type water purifier 2000 provided with the water purification cartridge 1000 shown in Figure 9. The water purifier 2000 includes an inner container 2002 that constitutes a raw water storage section 2004 and an outer container 2001 that constitutes a purified water storage section 2003. The inner container 2002 includes a cartridge housing 2002b and the water purification cartridge 1000 is arranged in this cartridge housing 2002b. The raw water stored in the raw water storage section 2004 flows from the raw water inlet into the water purification cartridge, passes through the water purification section under its own weight and is purified. The purified water obtained flows from a purified water outlet into the purified water storage section 2003.

### Citation List

### Patent Literature

Patent Literature 1: JP2003-514647A

### Summary of Invention

### Technical Problem

However, generally, when the water purification cartridge is transported or the like, the filtering material therein may leak out of the raw water inlet. If the leaked filtering material sticks to the engaging part of the water purification cartridge, the water purification cartridge may not be arranged in hermetic contact with the cartridge housing, the raw water may flow out of the raw water storage section into the purified water storage section without passing through the water purification cartridge. Therefore, a protective measure needs to be taken to prevent fine particles from sticking to the engaging part.

Examples of such a fine particle measure include covering the raw water supply port with a resin sheet to prevent the fine particles from leaking out. Moreover, even if the fine particles leaks out, it may be possible to prevent the fine particles from sticking to the engaging part by changing the way of packaging. However, these measures tend to increase the amount of packaging and there is a demand for a water purification cartridge that allows a fine particle measure to be taken more easily from the environmental points of view, too.

It is therefore an object of the present invention to provide a water purification cartridge that allows a fine particle measure to be taken easily.

### Solution to Problem

Thus, the present invention is a water purification cartridge that is arranged between a raw water storage section and a purified water storage section of a water purifier to purify raw water using a filtering material, in which a container containing the filtering material comprises a recessed portion recessed inward on a top surface thereof and a raw water inlet for introducing the raw water into the inside is formed at least on a sidewall of the recessed portion.

Furthermore, the present invention is a water purifier provided with the above-described water purification cartridge.

### Advantageous Effects of Invention

Adopting the configuration of the present invention makes it possible to provide a low-cost and high quality cartridge which allows a protective measure to be easily taken to prevent fine particles from sticking to an engaging part.

### Brief Description of Drawings

[Figure 1] Figure 1 is a schematic cross-sectional view for illustrating a configuration of a water purification cartridge of the present invention;
[Figure 2] Figure 2 is a schematic cross-sectional view for illustrating the configuration of the water purification cartridge of the present invention;
[Figure 3] Figure 3 is a schematic cross-sectional view for illustrating the configuration of the water purification cartridge of the present invention;
[Figure 4] Figure 4 is a schematic cross-sectional view illustrating a configuration example of the water purification cartridge according to an exemplary embodiment of the present invention;
[Figure 5] Figure 5 is a schematic cross-sectional view illustrating a configuration example of the water purification cartridge according to the exemplary embodiment of the present invention;
[Figure 6] Figure 6 is a schematic cross-sectional view illustrating a configuration example of the water purification cartridge according to the exemplary embodiment of the present invention;
[Figure 7] Figure 7 is a schematic cross-sectional view for illustrating a configuration of a water purifier equipped with the water purification cartridge according to the exemplary embodiment of the present invention;
[Figure 8] Figure 8 is a schematic cross-sectional view for illustrating a configuration of the water purifier equipped with the water purification cartridge according to the exemplary embodiment of the present invention;
[Figure 9] Figure 9 is a schematic cross-sectional view illustrating a configuration example of a conventional water purification cartridge; and
[Figure 10] Figure 10 is a schematic cross-sectional view for illustrating a configuration of a water purifier equipped with the conventional water purification cartridge.

### Description of Embodiments

The present invention relates to a water purification cartridge that is arranged between a raw water storage section and a purified water storage section of a water purifier to purify raw water using a filtering material. Furthermore, in the water purification cartridge of the present invention, a container containing the filtering material has a recessed portion recessed inward on its top surface and a raw water inlet is formed so as to introduce raw water into the inside at least on the sidewall of the recessed portion. Adopting such a configuration makes it possible to gently supply raw water into the container.

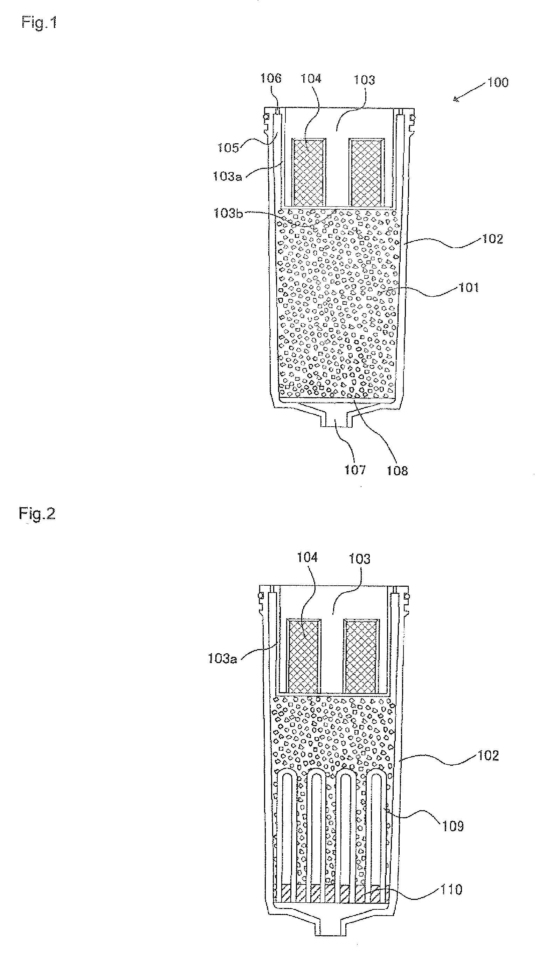

Hereinafter, a water purification cartridge of the present invention will be described in detail with reference to Figure 1. Figure 1 is a schematic cross-sectional view for illustrating a configuration of a water purification cartridge of the present invention. The present specification describes the vertical direction of the water purification cartridge with reference to the status of the water purification cartridge arranged in a water purifier.

In Figure 1, a water purification cartridge 100 includes a container 102 that contains an adsorbent 101 as a filtering material for converting raw water to purified water. A recessed portion 103 is formed on the top surface of the container 102 and a raw water inlet 104 for introducing raw water into the inside is formed on a side 103a of the recessed portion. The recessed portion 103 is formed in the vicinity of the center of the top surface of the container 102 so as to be recessed inward in the container.

Furthermore, an air outlet 106 for exhausting air such as air bubbles generated inside the container 102 is provided on the top surface of the container 102. That is, the container 102 includes the air outlet 106 in an upper part of a space 105 formed between a sidewall of the recessed portion 103a and an outer wall that constitutes the sidewall of the container 102. The air such as air bubbles generated inside the container 102 is accumulated in the space 105 between the sidewall of the recessed portion 103a and the lateral outer wall of the container 102 and is exhausted to the outside from the air outlet 106.

Furthermore, the adsorbent 101 as a filtering material is arranged inside the container 102 and below a recessed portion bottom surface 103b. The adsorbent 101 allows purified water to pass through and is maintained inside the container 102 by a barrier 108 that can contain the adsorbent inside the container.

Furthermore, a purified water outlet 107 is provided below the container 102 to drain purified water obtained by the raw water passing through the adsorbent 101.

The raw water enters the container 102 from the raw water inlet 104 formed on the sidewall of the recessed portion 103a. The raw water introduced into the container 102 flows downward under its own weight and is purified by the adsorbent 101. The purified water obtained by the raw water passing through the adsorbent 101 flows from the purified water outlet 107 into a purified water storage section of the water purifier.

In the present invention, the recessed portion is formed on the top surface of the container 102 and the raw water inlet is formed on the sidewall of the recessed portion, and thereby can gently supply raw water to the inside of the container.

The effects of the present invention will be described more specifically. In order to provide a high quality cartridge that prevents fine particles from sticking to an inner filtering material, for example, in the case of the water purification cartridge according to Patent Literature 1, it is necessary to protect the entire raw water supply port provided on the whole circumference of the upper part of the sidewall of the container or the engaging part of the filtering container provided on the outer circumference. In contrast, in the configuration of the present invention, only the top surface (flat surface) needs to be protected. That is, the top surface of the recessed portion may be covered with a seal or the like so that fine particles do not leak out of the recessed portion.

Hereinafter, the configuration of the present invention will be described in detail.

The material for the filtering material is a material having the function of purifying raw water, and examples thereof include adsorbent and hollow fiber membrane.

Examples of the adsorbent include powdered adsorbent, granular adsorbent resulting from granulating the powdered adsorbent, and fibrous adsorbent. Examples of such an adsorbent include natural-product-based adsorbent (natural zeolite, silver zeolite, acid clay or the like), or inorganic adsorbent such as compound-based adsorbent (synthetic zeolite, bacterial adsorption polymer, phosphate ore, molecular sheave, silica gel, silica alumina gel, porous glass or the like). Furthermore, activated carbon is preferably used as the adsorbent, and examples of activated carbon include powdered activated carbon, granular activated carbon, fibrous activated carbon, block-shaped activated carbon, extrusion molding activated carbon, molded activated carbon, compound-based granular activated carbon, compound-based fibrous activated carbon. Furthermore, in addition to inorganic adsorbent, organic adsorbent may also be used as the adsorbent, and examples of the organic adsorbent include molecular adsorption resin, ion exchange resin, ion exchange fiber, chelate resin, chelate fiber, high absorption resin, high water-absorptive resin, oil-absorption resin, oil absorbent. Among these materials, activated carbon having excellent adsorbability of organic compound such as residual chlorine in raw water, mold odor or trihalomethane is preferably used.

In general, since the finer the adsorbent is, the larger the specific surface area is, the reaction speed increases, thereby the purification capability increases. On the other hand, when the adsorbent is too fine, the adsorbent is more likely to leak from the air outlet and the raw water inlet. Thus, in the case of a granular adsorbent, the grain size at which cumulative oversize mass becomes 95% is preferably 0.4 mm or more.

The activated carbon preferably has properties such as a filling density of 0.1 to 0.5 g/ml, amount of adsorption of iodine of 800 to 4000 mg/g and granularity of 0.075 to 6.3 mm. Furthermore, when silver is loaded to activated carbon, it is possible to suppress reproduction of bacteria and microbes.

When activated carbon is used as the adsorbent, the mass of activated carbon in the water purification cartridge can be set to, for example, within a range of 10 to 200 g.

As shown in Figure 2, the water purification cartridge may also have a hollow fiber membrane 109 as the filtering material in addition to the adsorbent. In Figure 2, the hollow fiber membrane 109 is fixed inside the container at the bottom of the container 102 with potting resin 110 and an end of the hollow fiber membrane 109 has opening on the side opposite to the side of the potting resin on which the filtering material is arranged. When the potting resin 110 is used, the potting resin 110 becomes a substitute for the barrier 108 in Figure 1.

The arrangement of the adsorbent and the hollow fiber membrane is preferably as shown in Figure 2 such that the filtering material is located on the upstream side and the hollow fiber membrane is located on the downstream side.

The hollow fiber membrane is not particularly limited, but examples thereof include various materials based on cellulose, polyolefin (polyethylene, polypropylene), polyvinyl alcohol, ethylene/vinyl alcohol copolymer, polyether, polymethyl methacrylate (PMMA), polysulfone, polyacrylonitrile, polytetrafluoroethylene (Teflon (registered trademark)), polycarbonate, polyester, polyamide, aromatic polyamide. Among these materials, polyolefin-based hollow fiber membrane such as polyethylene and polypropylene is preferable in consideration of operability and workability of hollow fiber membrane, or further, incinerability when disposed of.

Furthermore, though not particularly limited, the hollow fiber membrane preferably has an outside diameter of 20 to 2000 µm, pore size of 0.01 to 1 µm, porosity of 20 to 90%, and film thickness of 5 to 300 µm. Furthermore, the hollow fiber membrane is preferably so-called hydrophilic hollow fiber membrane having a hydrophilic group on the surface.

As described above, the recessed portion 103 is formed in the top surface of the container 102 and the raw water inlet 104 is formed on the sidewall of the recessed portion 103a.

The raw water inlet is not particularly limited, but it is preferably formed with a mesh-like member from the standpoint of effectively allowing raw water to pass through and not allowing the inner adsorbent to pass through. The material for the mesh-like member is not particularly limited. As the material for the mesh-like member, for example, a metal material or resin material may be used. Furthermore, a mesh-like member having an opening smaller than a minimum grain size of the adsorbent is preferably used.

One or more raw water inlets may be provided on the sidewall of the recessed portion and the opening thereof is preferably large so as not to slow down the filtering speed. Furthermore, in order to introduce all the raw water of the raw water storage section into the container, the raw water inlet is preferably formed so that the bottom thereof has the same height as the bottom surface of the recessed portion.

Furthermore, the space 105 is provided between the sidewall of the recessed portion 103a and the outer wall that constitutes the sidewall of the container 102 and this space 105 constitutes an air collector where air such as air bubbles generated in the cartridge is concentrated. The air outlet 106 for exhausting the air accumulated in this space 105 is formed in the container at the top of the space 105.

The shape of the air outlet is not particularly limited, but it can be circular, ellipsoidal or polygonal, or undefined.

The shape of the air outlet 106 can be selected as appropriate, and, for example, the diameter of the air outlet may be set to 0.6 mm or more. By setting the diameter of the air outlet to 0.6 mm or more, it is possible to immediately exhaust air to the outside. Furthermore, the shape of the air outlet may also be selected in consideration of the size of the adsorbent accommodated in the container. The aforementioned diameter refers to a diameter in the case of a circular shape, a major axis in the case of an ellipsoidal shape, the longest diagonal in the case of a polygon and the largest width in the case of an undefined shape.

The shape of the container is not particularly limited, but it can be columnar, elliptic cylindrical or polygonal columnar shape or the like. When arranged on the top surface, that is, in the water purifier, the container has a recessed portion in the top surface thereof and has the raw water inlet formed on the sidewall of the recessed portion. The recessed portion is preferably provided at the center of the top surface. Providing the recessed portion at the center of the top surface allows raw water to be supplied into the container more uniformly. Furthermore, the sidewall of the container preferably has the same shape as the sidewall of the recessed portion.

One or more air outlets can be provided in the upper part of the recessed portion. The arrangement of the air outlet is not particularly limited, but when a plurality of air outlets are provided, the air outlets can be provided in the upper part of the recessed portion such that the neighboring air outlets have the same distance from each other. The number of air outlets provided can be 2 to 10, preferably 3 to 8 and more preferably 4 to 6.

Furthermore, the bottom surface 103b of the recessed portion can also reduce the deviation of the filtering material accommodated in the container. For example, even when the cartridge is inclined, since the bottom surface of the recessed portion can reduce the deviation of the filtering material, it is possible to reduce the occurrence of short paths. Furthermore, since the deviation of the filtering material can also be reduced, the filtering material is less likely to contact the raw water inlet and fine particles are less likely to leak out of the raw water inlet.

From the standpoint of further reducing the deviation of the filtering material and further performing filtering more smoothly, the difference between the outside diameter of the bottom surface of the recessed portion and the inner diameter of the outer wall of the container is preferably set to 4 mm to 20 mm and more preferably set to 6 mm to 8 mm.

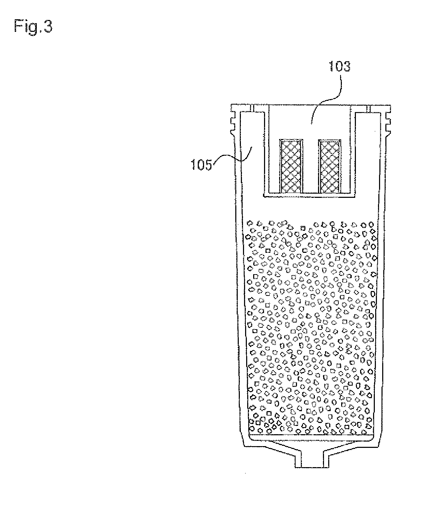

Furthermore, the scale (or volume) of the recessed portion and the scale (or volume) of the air collector can be selected as appropriate. In the water purification cartridge shown in Figure 3, for example, the recessed portion is formed to be smaller than that in the configuration in Figure 1.

Furthermore, the depth of the recessed portion is preferably set to 20 mm or greater, and more preferably set to 30 mm or greater.

Furthermore, the raw water inlet of the recessed portion is more preferably formed at length of 10 mm or more from the bottom surface of the recessed portion.

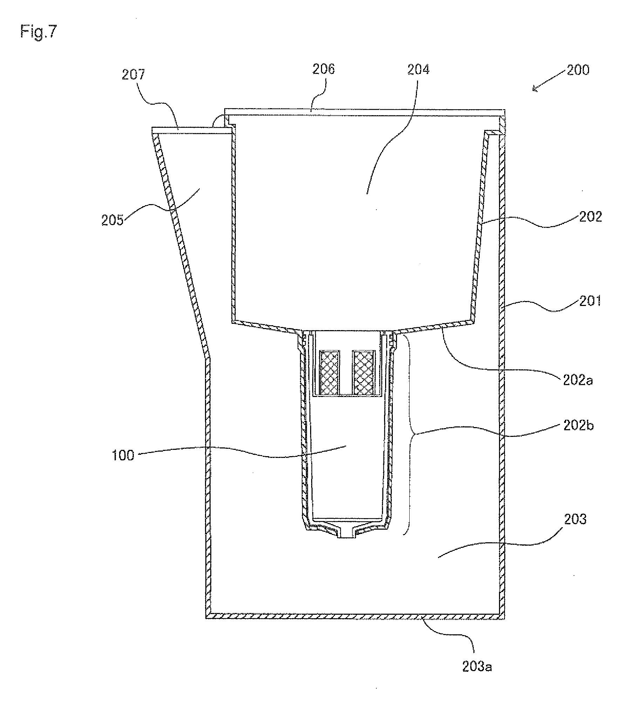

Figure 7 shows a configuration example of the water purifier provided with the water purification cartridge of the present invention.

The water purifier 200 shown in Figure 7 is a so-called pot-type water purifier. The water purifier 200 is principally constructed of a raw water storage section 204 that supplies and stores raw water of tap water or the like, the water purification cartridge 100 placed at the bottom of the raw water storage section 204, and a purified water storage section 203 located below the raw water storage section 204 and the water purification cartridge 100. The raw water stored in the raw water storage section 204 is purified when passing through the water purification cartridge 100 under its self-weight and flows down to the purified water storage section 203.

The water purifier 200 is provided with an open top-end, bottomed outer container 201 and an open top-end, bottomed inner container 202 which is inserted from the top-end opening of the outer container 201 and arranged in the outer container 201. The inner container 202 is arranged at a depth half or less the depth of the outer container 201, tightly fitted into the portion of the upper half part of the outer container 201 except a predetermined clearance 205 to thereby form the raw water storage section 204 in the inner container 202. The purified water storage section 203 is provided between a bottom wall 202a of the inner container 202 and a bottom wall 201 a of the outer container 201. The clearance 205 is formed so as to extend upward from the purified water storage section 203 and functions as a pouring path when pouring purified water.

A top cover 206 is fitted in the top-end opening of the inner container 202. For example, an openable/closable flap may be provided at the center of the top cover 206 so as to open a water inlet or close the water inlet from above.

Furthermore, the opening formed at the top end of the clearance 205 functions as a pouring inlet and the pouring inlet is provided with a cover 207.

The bottom wall 202a of the inner container is provided with a cartridge housing 202b that accommodates a water purification cartridge and the bottom wall 202a of the inner container is formed into a gentle downward slope toward the cartridge housing 202b. The cartridge housing 202b of the water purification cartridge is recessed from the bottom wall 202a of the inner container toward the purified water storage section. The water purification cartridge 100 is fitted into the cartridge housing 202b from above. The cartridge housing 202b has an opening at the center bottom thereof and has a structure in which the raw water storage section 204 communicates with the purified water storage section 203 located below via the cartridge housing 202b and this opening at the bottom, that is, the water purification cartridge 100 fitted in the cartridge housing 202b.

Furthermore, in the present invention, fine particles can be also prevented from flying around. When the water purification cartridge is placed in the water purifier and raw water is poured into the raw water storage section, the configuration of the present invention causes water flowing from around into the recessed portion provided in the top surface of the container to collide with the water therein, and thereby allows the impetus of the water to reduce. Thus, it is possible to prevent the fine particles from flying around when raw water is poured in without deteriorating the filtering performance such as filtering processing speed.

### (Exemplary embodiment 1)

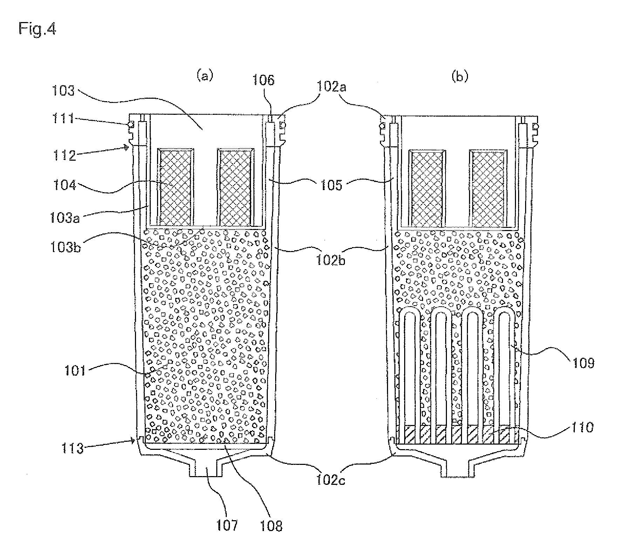

An exemplary embodiment of the water purification cartridge will be described in detail with reference to Figure 4.

In Figure 4, the container 102 of the water purification cartridge 100 is principally constructed of a cylindrical case body 102b that accommodates a filtering material and constitutes a purification section, a top cover 102a that covers the top opening of the case 102b and a bottom cover 102c arranged at the bottom of the case body 102b.

The top cover 102a incudes a recessed portion 103 which has a circular cross-sectional shape at the center and is configured such that the recessed portion 103 is inserted into the case body 102b when the top cover 102a is connected to the case body 102b at a top coupling section 112.

In the present exemplary embodiment, the coupling section which connects the top cover 102a and the case body 102b is arranged at higher position than the bottom surface of the recessed portion, thereby can accommodate an adsorbent 101 tightly up to the vicinity of a bottom surface of the recessed portion 103b. Although not particularly limited, for example, adhesion or welding may be used for the connection between the top cover 102a and the case body 102b.

In the present exemplary embodiment, by covering the top surface of the container with a flat sealing member, the fine particles can be prevented from leaking from the recessed portion 103 even if the fine particles leak out of the raw water inlet and then the fine particles can be prevented from sticking to the engaging part. Therefore, it is possible to easily take a protective measure to prevent fine particles from sticking to the engaging part.

Furthermore, the bottom surface of the recessed portion 103b and the wall surface of the case body constitute a purification section in which the filtering material is arranged. Furthermore, a space 105 is provided between a sidewall of the recessed portion 103a and the wall surface of the case body, air such as air bubbles in the cartridge flows into the space 105 and the air is exhausted from an air outlet 106 provided in part of the top cover 102a located above the space 105.

Furthermore, the sidewall 103a of the recessed portion is provided with a raw water inlet 104 for introducing raw water into the purification section in the cartridge. The raw water introduced into the inside from the raw water inlet 104 passes through the space 105 under its self-weight and reaches the purification section in which the adsorbent 101 is arranged. The raw water inlet 104 is formed with a mesh-like member and has a structure in which the raw water can pass through but the adsorbent is difficult to pass through.

Furthermore, a barrier 108 which holds the adsorbent 101 in the case body and which the purified water can pass through is provided below the case body 102b. The purification section in which the adsorbent 101 is arranged is constructed of the aforementioned bottom surface 103b of the recessed portion, the case body wall surface and the barrier 108.

The bottom cover 102c having a purified water outlet 107 is provided in the bottom opening of the case body 102b. The bottom cover 102c is connected with the case body 102b via a bottom coupling section 113. The purified water purified by the adsorbent 101 is drained out of the purified water outlet 107 provided at the center of the bottom cover 102c. The bottom cover 102c is formed into a gentle downward slope toward the purified water outlet 107.

Furthermore, in the present exemplary embodiment, a sealed structure is adopted, in which a groove for arranging an elastic body 111 such as a gasket is formed on the side of the top cover 102a so that the elastic body 111 provides hermetic sealing. By adopting such a sealed structure, the cartridge can be accommodated so as to hermetically fit to the cartridge housing 202b of the inner container 202 as shown in Figure 7.

Figure 4(b) shows a configuration example of the water purification cartridge that incorporates a hollow fiber membrane. In this configuration, potting resin 110 functions as a substitute for the barrier in Figure 4(a).

### (Exemplary embodiment 2)

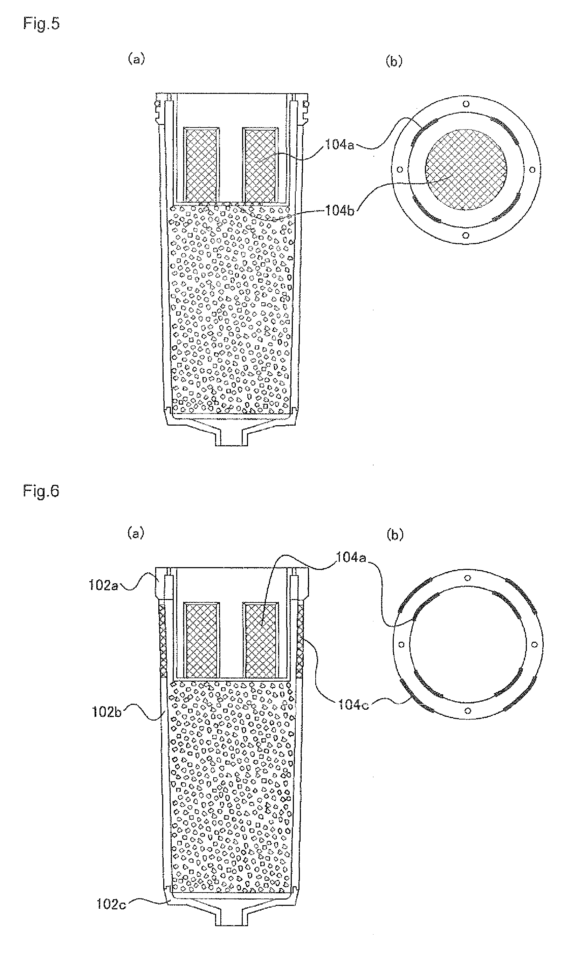

Furthermore, the raw water inlet can also be provided on the bottom surface of the recessed portion. Figure 5 shows a schematic diagram of a water purification cartridge having a raw water inlet (hereinafter, also referred to as "second raw water inlet") 104b provided on the bottom surface of the recessed portion in addition to a raw water inlet (hereinafter, also referred to as "first raw water inlet") 104a provided on the sidewall of the recessed portion. As shown in Figure 5, a raw water inlet may also be provided on the bottom surface of the recessed portion and by adopting such a configuration, it is possible to effectively supply raw water also to the adsorbent below the bottom surface of the recessed portion, and thereby the filtering efficiency can be increased. When the raw water inlet is provided on the bottom surface of the recessed portion, one or more raw water inlets can be provided and these raw water inlets are preferably formed with a mesh-like member.

### (Exemplary embodiment 3)

Furthermore, the raw water inlet can also be provided on the sidewall of the container. Figure 6 shows a schematic diagram of a water purification cartridge having a raw water inlet (hereinafter, referred to as "third raw water inlet") 104c provided on the sidewall of the outer wall of the container in addition to the raw water inlet 104a provided on the sidewall of the recessed portion. As shown in Figure 6, the third raw water inlet may be provided on the sidewall of the container and by adopting such a configuration, it is possible to effectively supply raw water to the inside of the container.

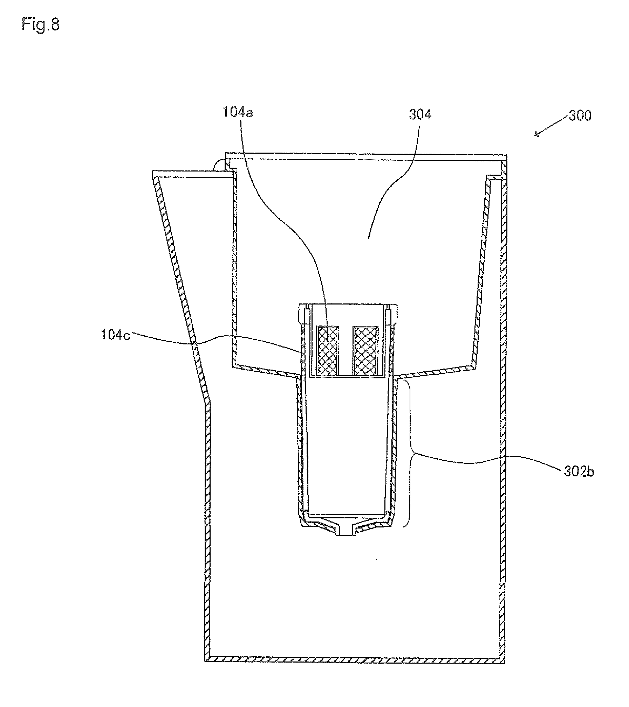

Figure 8 shows a schematic diagram of the water purification cartridge of the present exemplary embodiment fitted in a water purifier 300. In the present exemplary embodiment, the third raw water inlet 104c is preferably formed at the height of the first raw water inlet 104a. Furthermore, the bottom end of the third raw water inlet 104c is preferably formed at the same height as the bottom end of the first raw water inlet 104a. Furthermore, as shown in Figure 8, the water purification cartridge of the present exemplary embodiment is placed in the water purifier so that the top end opening of a cartridge housing 302b has the same height as the bottom end of the third raw water inlet 104c. The water poured into a raw water storage section 304 is supplied from the first raw water inlet 104a and the third raw water inlet 104c to the inside of the container.

**Reference Signs List**

| | |
|---|---|
| 100 | water purification cartridge |
| 101 | adsorbent |
| 102 | container |
| 102a | top cover |
| 102b | case body |
| 102c | bottom cover |
| 103 | recessed portion |
| 103a | sidewall of recessed portion |
| 103b | bottom surface of recessed portion |
| 104 | raw water inlet |
| 104a | first raw water inlet |
| 104b | second raw water inlet |
| 104c | third raw water inlet |
| 105 | space (air collector) |
| 106 | air outlet |
| 107 | purified water outlet |
| 108 | barrier |
| 109 | hollow fiber membrane |
| 110 | potting resin |
| 111 | elastic body |
| 112 | top coupling section |
| 113 | bottom coupling section |
| 200 | water purifier |
| 201 | outer container |
| 202 | inner container |
| 203 | purified water storage section |
| 204 | raw water storage section |
| 205 | clearance |
| 206 | top cover |
| 207 | pouring cover |

## Claims

1. A water purification cartridge that is arranged between a raw water storage section and a purified water storage section of a water purifier to purify raw water using a filtering material, wherein a container containing the filtering material comprises a recessed portion recessed inward on a top surface thereof and a raw water inlet for introducing the raw water into the inside is formed at least on a sidewall of the recessed portion.

2. The water purification cartridge according to claim 1, wherein the container comprises an air outlet for exhausting air in an upper part of a space formed between the sidewall of the recessed portion and an outer wall that constitutes a sidewall of the container.

3. The water purification cartridge according to claim 1 or 2, wherein the container comprises a purified water outlet for draining purified water obtained after passing through the filtering material below the filtering material.

4. The water purification cartridge according to any one of claims 1 to 3, wherein the filtering material is arranged in the container and below a bottom surface of the recessed portion.

5. The water purification cartridge according to any one of claims 1 to 4, wherein the container comprises at least a top cover in which the recessed portion is formed and a case body that accommodates the filtering material, and wherein the top cover and the case body are coupled above the bottom surface of the recessed portion.

6. The water purification cartridge according to any one of claims 1 to 5, wherein a raw water inlet is further formed on the bottom surface of the recessed portion.

7. The water purification cartridge according to any one of claims 1 to 6, wherein a raw water inlet is further formed on an outer wall that constitutes the sidewall of the container.

8. The water purification cartridge according to claim 7, wherein the raw water inlet formed on the outer wall that constitutes the sidewall of the container is arranged at a height of the raw water inlet formed on the sidewall of the recessed portion.

9. The water purification cartridge according to any one of claims 1 to 8, wherein an adsorbent is arranged as the filtering material.

10. The water purification cartridge according to claim 9, further comprising a hollow fiber membrane as the filtering material, wherein the adsorbent is arranged on an upstream side and the hollow fiber membrane is arranged on a downstream side.

11. The water purification cartridge according to claim 10, wherein the hollow fiber membrane is fixed in the container with potting resin, and wherein an end of the hollow fiber membrane is open to a surface opposite to the surface on the side on which the filtering material of the potting resin is arranged.

12. The water purification cartridge according to any one of claims 1 to 11, wherein the raw water inlet is formed with a mesh-like member.

13. A water purifier comprising the water purification cartridge according to any one of claims 1 to 12.
